# EUROPEAN PATENT APPLICATION

(11) **EP 4 694 229 A1**
(43) Date of publication of application: **11.02.2026**
(21) Application number: 23931431.3
(22) Date of filing: 06.04.2023
(51) Int. Cl.: H04W 4/70

(54) **SIGNAL TRANSCEIVING METHOD AND APPARATUS AND COMMUNICATION SYSTEM**

(71) Applicant: FUJITSU LIMITED, Kawasaki-shi, Kanagawa 211-8588 (JP)
(72) Inventor: YI, Su, Beijing 100022 (CN); JIA, Meiyi, Beijing 100022 (CN); LI, Guorong, Beijing 100022 (CN)
(74) Representative: Haseltine Lake Kempner LLP
(86) International application number: PCT/CN2023/086711
(87) International publication number: WO 2024/207363

(57) **Abstract**

Embodiments of the present application provide a signal transceiving method and apparatus and a communication system. A configuration information apparatus is applied to an IAB node, the apparatus comprises a first processing unit, and the first processing unit controls the node, so that the node performs the following operations: a first distributed unit (IAB-DU) and a second distributed unit (IAB-DU) in the node are respectively configured with uplink backhaul mapping information by different donor central units; and a mobile terminal of the node transmits a signal according to the uplink backhaul mapping information.

## Description

### FIELD

Embodiments of the present disclosure relate to the field of communication technologies.

### BACKGROUND

Integrated access and backhaul (IAB) implements a radio relay function in a next generation radio access network (NG-RAN). An integrated access and backhaul node (IAB-node) supports access and backhaul via New Radio (NR). Terminating point of NR backhaul in a network side is called an IAB-donor, which represents a network device (for example, a gNB) having a function of supporting IAB.

An IAB-node may be connected to an IAB-donor via one or more hops. These multi-hop connections form a Directed Acyclic Graph (DAG) topological structure which takes the IAB-donor as a root node. The IAB-donor is responsible for performing centralized resource management, topology management and routing management in an IAB network topology.

The IAB-node supports a function of a gNB-DU (distributed unit), the IAB-node DU is also called an IAB-DU, and the IAB-DU is an endpoint of a radio access (NR) interface to a terminal equipment (UE) and a next-hop IAB-node and is also an endpoint of an F1 protocol to a gNB-CU (central unit) on the IAB-donor. The IAB-DU may serve for a normal UE and a child IAB-node. The IAB-DU implements a function of a network side device, is connected to a downstream child IAB-node, provides NR air interface access for a UE and the downstream child IAB-node, and establishes F1 connection to the IAB donor-CU.

In addition to the function of the gNB-DU, the IAB-node also supports some functions of an UE called an IAB-MT (Mobile Termination), the IAB-MT includes, for example, functions of a physical layer, a layer 2, RRC and NAS to be connected to a gNB-DU of another IAB-node or IAB-donor, and to be connected to a gNB-CU on the IAB-donor and to a core network. The IAB-MT supports such functions as a UE physical layer, access stratum (AS), a radio resource control (RRC) layer and a non-access stratum (NAS), and may be connected to a parent IAB-node.

The IAB-donor is a terminating node on a network side, and the IAB-donor provides network access for an IAB-MT or a UE via a backhaul or access link. The IAB-donor is further divided into an IAB-donor-CU (central unit) and an IAB-donor-DU. The IAB-DU and the IAB-donor-CU are connected via an F1 interface. In an independent networking scenario, the gNB is connected to the IAB-donor-CU via an Xn interface.

To support multi-hop routing forwarding of a data packet, a Backhaul Adaptation Protocol (BAP) sublayer is introduced to the IAB. The BAP sublayer is located above a radio link control (RLC) sublayer and below an IP layer, and supports such functions as a packet destination node and path selection, packet routing forwarding, bearer mapping, flow control feedback, and backhaul link failure notification.

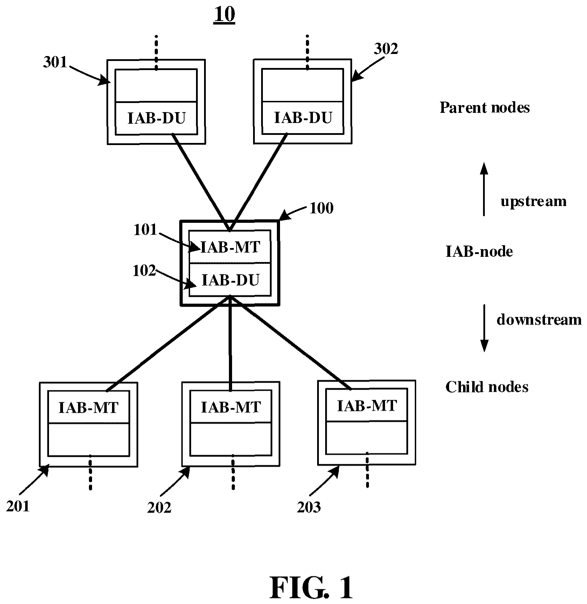

FIG. 1 is a schematic diagram of an IAB parent-child node relationship. As shown in FIG. 1, in an IAB parent-child node relationship structure 10, an IAB-node 100 includes an IAB-MT functional unit 101 and an IAB-DU functional unit 102, neighboring nodes connected to an interface of the IAB-DU functional unit 102 are called child nodes, such as child nodes 201, 202 and 203 shown in FIG. 1, the IAB-DU functional unit 102 may communicate with the child nodes 201, 202 and 203 via an air interface (Uu); neighboring nodes connected to an interface of the IAB-MT functional unit 101 are called parent nodes, such as parent nodes 301 and 302 shown in FIG. 1, the IAB-MT functional unit 101 may communicate with the parent nodes 301 and 302 via the air interface (Uu).

As shown in FIG. 1, a direction from the IAB-node 100 to the child nodes 201, 202, and 203 is called a downstream direction, and a direction from the IAB-node 100 to the parent nodes 301 and 302 is called an upstream direction. An IAB-donor (not shown) performs centralized resource management, topology management and routing management for the IAB topological structure 10.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

### SUMMARY

In a multi-hop scenario, in order to implement relay forwarding of a data packet, an IAB-node needs to determine a destination node to which the data packet reaches, and then determines a next-hop node corresponding to the destination node according to a routing table and transmits the next-hop node. A donor-CU configures the IAB-node with mapping from each uplink F1-U tunnel initiated by the IAB-node, a non-UE associated F1AP message, a UE-associated F1AP message and non-F1 traffic to a BAP routing identity via F1AP (F1 application protocol) signaling.

The IAB-node determines BAP routing identities corresponding to different types of uplink IP packets initiated from the IAB-node according to routing identity mapping information, and encapsulates BAP subheaders containing BAP routing identity information for these uplink IP packets. The donor-CU configures the donor-DU with mapping from different types of downlink data packets to a BAP routing identity via the F1AP signaling. The donor-DU determines BAP routing identities corresponding to the received downlink IP packets according to the routing identity mapping information, and encapsulates downlink BAP subheaders containing BAP routing identities for these downlink IP packets.

The BAP routing identity includes a destination BAP address and a path identity from the IAB-node to the donor-DU. The BAP address is also called a DESTINATION in a BAP header. Each IAB-node and donor-DU are configured with a BAP address.

At the time of IAB-node initiation (integration), RRC may configure a default backhaul (BH) RLC channel and a default BAP routing identity for non-F1-U traffic. These configurations may be updated in a topology adaptation scenario.

In an upstream direction, the IAB-donor-CU configures the IAB-node with mapping relationship between upstream F1 and non-F1 traffic originating from the IAB-node and appropriate BAP routing ID, next-hop BAP address, as well as BH RLC channel. A specific mapping relationship is configured for each F1-U GTP-U tunnel, a non-UE-associated F1AP message, a UE-associated F1AP message, and non-F1 traffic.

The IAB-node may have redundant paths to different IAB-donor-CUs. For an IAB-node that works in a Stand Alone (SA) mode, the IAB-MT may be allowed to simultaneously have backhaul links to two parent nodes via NR-DC (NR-NR Dual Connectivity), so as to achieve route redundancy of backhaul. Two parent nodes may be connected to different IAB-donor-CUs, these IAB-donor-CUs may control establishment and release of redundant routes passing through the two parent nodes. The gNB-DU function of the parent node, together with a corresponding IAB-donor-CU, gains a role of a master node (MN) and/or a node secondary (SN) of an IAB-MT. A Framework of the NR-DC -- such as a process related an MCG (master cell group)/an SCG (secondary cell group) -- is used to configure dual wireless connection between the IAB-node and the parent node.

IAB-MT may be migrated to a parent node under a different IAB-donor-CU. In this situation, collocated IAB-DU and IAB-DU of the descendant node maintain F1 connection to an original IAB-donor-CU. This migration is called inter-donor partial migration. This IAB-node with IAB-MT migrated to a new IAB-donor-CU is a boundary IAB-node. After the inter-donor partial migration, F1 traffic of the IAB-DU and of the descendant node are routed via a BAP layer of an IAB topology to which the IAB-MT is migrated. The SA mode is capable of supporting the inter-donor partial migration.

When an IAB-node in the SA mode declares RLF of a backhaul link, it may perform RLF recovery at parent nodes under different IAB-donor-CUs. Same as the inter-donor partial migration, collocated IAB-DU and IAB-DU of the descendant node maintain F1 connection to an IAB-donor-CU.

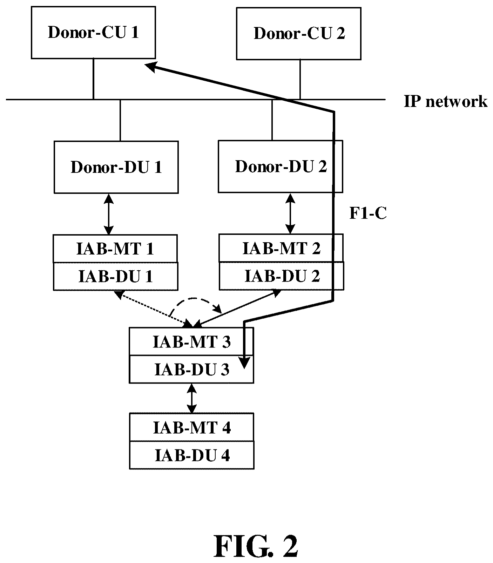

FIG. 2 shows a scenario of partial migration. IAB-node 3 is called a boundary IAB-node. The boundary IAB-node refers to that an RRC interface and F1 interface thereof are terminated to different IAB-donor-CUs. The boundary IAB-node is applicable to partial migration, inter-donor topology redundancy, and inter-donor radio link failure (RLF) recovery. For example, in FIG. 2, a DU of node 3 is terminated to CU1, the MT has RRC connection to CU2, thus satisfying the definition of the boundary IAB-node. A descendant IAB-node is a node that accesses to a network via the boundary IAB-node, and each node is singly connected to its own parent node, such as IAB-node 4. An F1-terminating node refers to a donor-CU that terminates F1 interfaces of the boundary IAB-node and the descendant node, such as donor-CU1 (F1 of IAB-DU3 and IAB-DU4 in FIG. 2 is terminated to donor-CU1). A Non-F1-terminating node refers to a CU that does not terminate F1 interfaces of the boundary IAB-node and the descendant node and has a donor function, such as donor-CU2. Because the non-F1-terminating node and the IAB-MT have RRC connection, the non-F1-terminating node may further be called a donor node of the IAB-MT, and the non-F1-terminating donor CU is also called a donor CU of the IAB-MT.

In FIG. 2, IAB-MT3 changes from single connection to a parent node, IAB-node 1, to single connection to a parent node, IAB-node 2. Both IAB-DU3 and its child node, IAB node 4, still have the F1 connection to donor-CU1, but a path through which the F1 connection passes finally reaches CU1 via the IAB-node 2. In the scenario of partial migration shown in FIG. 2, the boundary node is a migrating node. The partial migration scenario also applies to partial RLF recovery.

Mobility of a mobile IAB (mIAB) or a mobile relay over a larger region faces a challenge: when it is in the process of moving, a donor (i.e., F1-terminating donor) of an IAB needs to be changed, that is, an F1 interface of an IAB-DU needs to be migrated, this migration process is called IAB-DU migration. Packet data convergence protocols (PDCPs) and radio resource control (RRC) connections of terminal equipment (such as user equipment) served by the mobile IAB will be affected.

The inventor of the present disclosure finds that in an IAB-DU migration scenario, in order to perform handover of a serving terminal equipment, the mobile IAB-node needs to support two logical mobile IAB-DUs simultaneously, these two DUs have F1AP association with a source CU and a target CU respectively. However, in related arts, a method in which an IAB-node supports two or more DUs is not defined.

Embodiments of the present disclosure provide a method and an apparatus for transmitting and receiving a signal, and a communication system, wherein a first distributed unit (IAB-DU) and a second distributed unit (IAB-DU) in an IAB-node are respectively configured with uplink backhaul mapping information by different donor central units, thereby the IAB-node is capable of supporting two or more distributed units (DUs).

According to one aspect of the embodiments of the present disclosure, an apparatus for transmitting and receiving a signal is provided, applicable to an integrated access and backhaul (IAB) node, the apparatus including a first processing unit, the first processing unit controlling the node to enable the node to execute the following operations:
configuring a first distributed unit (IAB-DU) and a second distributed unit (IAB-DU) in the node respectively with uplink backhaul mapping information by different donor central units; and
transmitting a signal by a mobile termination of the node according to the uplink backhaul mapping information.

According to another aspect of the embodiments of the present disclosure, an apparatus for transmitting and receiving a signal is provided, applicable to an integrated access and backhaul (IAB) node, the apparatus including a second processing unit, the second processing unit controlling the node to execute the following operations:
using common default BAP configuration or respectively using respective default BAP configuration by a mobile termination (MT) in the node for a first distributed unit (IAB-DU) and a second distributed unit (IAB-DU) in the node; and
transmitting a signal by the mobile termination MT in the node based on the default BAP configuration.

According to another aspect of the embodiments of the present disclosure, an apparatus for transmitting and receiving a signal is provided, applicable to an integrated access and backhaul (IAB) node, the apparatus including a third processing unit, the third processing unit controlling the node to execute the following operation:
for data in a downstream direction arriving at the node, determining by the node based on an IP address that the data in the downstream direction are transferred to a first distributed unit (IAB-DU) or second distributed unit (IAB-DU) of the node.

According to another aspect of the embodiments of the present disclosure, an apparatus for transmitting and receiving a signal is provided, applicable to an integrated access and backhaul (IAB) node, the apparatus including a fourth processing unit, the fourth processing unit controlling the node to execute the following operation:
before migration of a DU is performed, performing configuration of dual active protocol stack (DAPS) of a radio bearer on a terminal equipment served by the node.

Advantageous effect of the embodiments of the present disclosure lies in: enabling the IAB-node to support two or more DUs.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF THE DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.
FIG. 1 is a schematic diagram of an IAB parent-child node relationship;
FIG. 2 shows a scenario of partial migration;
FIG. 3 shows an example in which an IAB-node uses a multi-IAB-DU during a DU migration process;
FIG. 4 is a schematic diagram of a method for transmitting and receiving a signal in the embodiments of a first aspect;
FIG. 5 is a schematic diagram of a method for transmitting and receiving a signal in the embodiments of a second aspect;
FIG. 6 is a schematic diagram of DU migration;
FIG. 7 is a schematic diagram of a method for transmitting and receiving a signal in the embodiments of a third aspect;
FIG. 8 is a schematic diagram of UE handover;
FIG. 9 is a schematic diagram of a method for transmitting and receiving a signal in the embodiments of a fourth aspect;
FIG. 10 is a schematic diagram of an apparatus for transmitting and receiving a signal in the embodiments of a fifth aspect;
FIG. 11 is a schematic diagram of an apparatus for transmitting and receiving a signal in the embodiments of a sixth aspect;
FIG. 12 is a schematic diagram of an apparatus for transmitting and receiving a signal in the embodiments of a seventh aspect;
FIG. 13 is a schematic diagram of an apparatus for transmitting and receiving a signal in the embodiments of an eighth aspect; and
FIG. 14 is a schematic diagram of composition of an electronic device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as New Radio (NR), Long Term Evolution (LTE), LTE-Advanced (LTE-A), Wideband Code Division Multiple Access (WCDMA), High-Speed Packet Access (HSPA) and so on.

And, communication between devices in a communication system can be carried out according to a communication protocol at any stage, for example may include but be not limited to the following communication protocols: 1G (generation), 2G, 2.5G, 2.75G, 3G, 4G, 4.5G, 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: an Integrated Access and Backhaul node (IAB-node), a relay, a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: node B (NodeB or NB), evolution node B (eNodeB or eNB) and a 5G base station (gNB), etc., and may further includes Remote Radio Head (RRH), Remote Radio Unit (RRU), a relay or a low power node (such as femeto, pico, etc.). And the term "base station" may include their some or all functions, each base station may provide communication coverage to a specific geographic region. The term "cell" may refer to a BS and/or its coverage area, which depends on the context in which this term is used.

In the embodiments of the present disclosure, the term "User Equipment (UE)" or "Terminal Equipment (TE) or Terminal Device" refers to, for example, a device that accesses a communication network and receives network services through a network device. The terminal equipment may be fixed or mobile, and may also be referred to as Mobile Station (MS), a terminal, Subscriber Station (SS), Access Terminal (AT), a mobile termination (MT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above.

In each embodiment of the present disclosure, high layer signaling may be e.g. radio resource control (RRC) signaling; for example, is called an RRC message, for example includes a Master Information Block (MIB), system information, and a dedicated RRC message; or is called an RRC information element (RRC IE). The high-layer signaling e.g. may further be F1-C signaling, or is called an F1AP protocol. However, the present disclosure is not limited to this.

In the present disclosure, a multi-hop IAB network deployment scenario is used as an example to illustrate each embodiment, multiple terminal equipments (for example, UEs) are connected to an IAB-donor via a multi-hop IAB-node and finally access a network, the network for example is a 5G network.

An IAB-node connected to a terminal equipment (such as a user equipment) is mobile.

Each embodiment of the present disclosure may be used for other mobile nodes, such as relay, etc. Each embodiment of the present disclosure is described by taking IAB as an example.

In a DU migration scenario, in order to perform handover of a serving UE, the mobile IAB-node needs to support two logical mobile IAB-DUs simultaneously, these two DUs have F1AP associations with a source CU and a target CU respectively.

A terminal equipment (such as a UE) connected to a mobile IAB-node is handed over from a cell of a logical mobile IAB-DU (i.e., a source logical mobile IAB-DU) having F1AP association with a source CU to a logical mobile IAB-DU (i.e., a target logical mobile IAB-DU) having F1AP association with a target CU.

During a DU migration process, the UE considers cells of two logical DUs as different physical cells (for example, if the cells use the same carrier, then the cells use different PCIs). Cells of these two logical DUs use separated physical resources (i.e., different carriers in traditional Layer 1, or orthogonal time and frequency resources in the case of the same carrier).

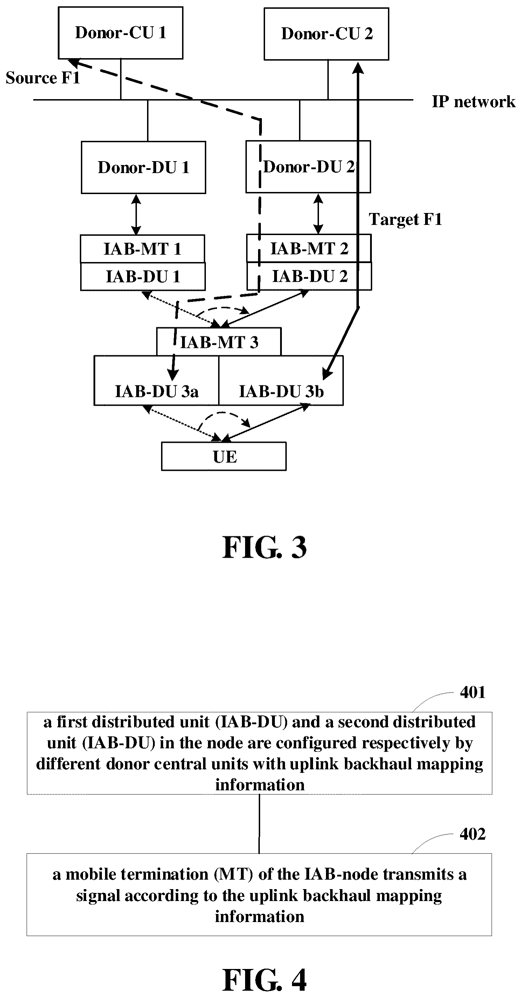

FIG. 3 shows an example in which an IAB-node uses a multi-IAB-DU during a DU migration process. IAB-node 3 contains two DU parts, i.e., a first IAB-DU and a second IAB-DU. The first IAB-DU in FIG. 3 is IAB-DU3a, which performs F1 connection to a source IAB-donor-CU (donor-CU1), and may also be called a source IAB-DU, or may be a normal IAB-DU that normally does not perform DU migration; the second IAB-DU in FIG. 3 is IAB-DU3b, which performs F1 connection to a target IAB-donor-CU (donor-CU2), and may also be called a target IAB-DU. These two IAB-DUs may be logical IAB-DUs or virtual IAB-DUs. That is, from the perspective of a UE, they are not different from normal IAB-DUs and gNB-DUs, have the functions of normal DUs, but are integrated inside an IAB, and the integration method may be determined by implementation. Furthermore, for these two IAB-DUs, a traditional IAB-DU implementation method may further be used, that is, just two physical IAB-DUs.

Each embodiment of the present disclosure is described based on the above scenarios. It should be noted that each embodiment of the present disclosure may not be limited to the above scenarios.

### Embodiments of a first aspect

Uplink BH mapping information of a current BAP layer is configured by F1AP, that is, an IAB-donor-CU configures an IAB-DU via F1AP signaling (F1-C, F1 control plane). These configurations are saved as corresponding configuration variables in the BAP layer, including e.g. a first uplink traffic to routing ID mapping configuration and a first uplink traffic to BH RLC channel mapping configuration, and are used by an IA-node to perform selection of a BAP routing identity and a BH RLC channel when data received from an upper layer are needed to transmit in an upstream direction.

In order to support a node to contain multiple IAB-DUs, different F1-Cs are required to respectively configure the uplink BH mapping information for corresponding IAB-DUs. In this way, uplink traffics of different IAB-DUs may be mapped to different BAP routing IDs and/or BH RLC channels, thereby achieving separation of source F1 and target F1 paths.

Embodiments of the first aspect of the present application provide a method for transmitting and receiving a signal, applicable to an IAB-node, such as IAB-node 3 shown in FIG. 3 (for example the IAB-node 3 has IAB-MT3, IAB-DU3a and IAB-DU3b), and in the following description, it is referred to as the IAB-node or the node.

In the embodiments of the first aspect, the first distributed unit (such as IAB-DU3a in FIG. 3) is controlled by the first donor central unit (such as Donor-CU1 in FIG. 3), and the second distributed unit (such as IAB-DU3b in FIG. 3) is controlled by the second donor central unit (such as Donor-CU2 in FIG. 3).

The first donor central unit is an F1 terminating donor central unit of the node in a case where migration of a distributed unit is not performed, or the only F1 terminating donor central unit of the node, or a source donor central unit during a process of migration of a distributed unit; the second donor central unit is a target donor central unit during a process of migration of a distributed unit.

FIG. 4 is a schematic diagram of a method for transmitting and receiving a signal in the embodiments of a first aspect. As shown in FIG. 4, the method includes:
401, a first distributed unit (IAB-DU) and a second distributed unit (IAB-DU) in the node are configured respectively by different donor central units with uplink backhaul mapping information; and
402, a mobile termination (MT) of the IAB-node transmits a signal according to the uplink backhaul mapping information.

In the operation 401 of the present application, the uplink backhaul mapping information is configured for DUs. In the operation 402, the MT transmits uplink signals based on the configured uplink backhaul mapping information, and for a method for the MT to transmit uplink signals, relevant technologies may be referred to.

In the present disclosure, the operation 401 may be implemented through Method 1 or Method 2 below.

### Method 1:

a second backhaul adaptation protocol (BAP) entity different from a first BAP entity is set up in a node, the second BAP entity may be a newly added BAP entity in the node. The first BAP entity maintains variables, configured by a first donor central unit (donor-CU), of a BAP layer of the node, and the second BAP entity maintains variables, configured by the second donor central unit (donor-CU), of the BAP layer of the node.

The first donor-CU such as Donor-CU 1 in FIG. 3 is also called a source donor-CU; the second donor-CU such as Donor-CU 2 in FIG. 3 is also called a target donor-CU.

In at least one embodiment of Method 1, an existing MT BAP entity (i.e., the first BAP entity) saves or uses uplink traffic to routing ID mapping configuration and uplink traffic to BH RLC channel mapping configuration associated with F1 configured by the first donor-CU (such as source donor-CU). The second BAP entity stores or uses uplink traffic to routing ID mapping configuration and uplink traffic to BH RLC channel mapping configuration associated with F1 configured by the second donor-CU (such as target donor-CU).

In a data transmission process at the BAP layer, for data transmission in an upstream direction, an IAB-MT selects a corresponding first BAP entity or second BAP entity according to an IAB-DU to which traffics belong. Then, each IAB-MT entity performs its own operation, without affecting each other. The IAB-DU to which the traffics belong may be determined by which IAB-DU a backhaul adaptation protocol service data unit (BAP SDU) received from an upper layer comes from, or an IAB-DU associated with the traffics may be determined via a donor-CU corresponding to a target IP address of the BAP SDU received from the upper layer.

For establishment of the second BAP entity, it may be set up simultaneously when the first BAP entity is set up, in this way, for a mobile IAB-node, preparations for migration may be made in advance to improve the efficiency of migration. The second BAP entity may also be set up after an IAB-node receives a DU migration notification. A method for setting up the second BAP entity may be configured by a network side, for example is configured via RRC signaling.

In at least some embodiments of Method 1, new configuration information may be added to an RRC layer (for example, the new configuration information is second configuration information), the second configuration information being used to configure the second BAP entity of the IAB-node. A new indication may be added in a first BAP configuration (bap-config) IE in an RRC reconfiguration message, to indicate that the configuration information of this bap-config is for the second BAP entity. A new IE, i.e., second BAP configuration information may be further added in the RRC reconfiguration message, for example is called bap-Config2 IE for configuring the second BAP entity of the IAB-node. The second BAP configuration information may include one or more pieces of configuration information related to the second IAB-DU, and these configuration information, for example, includes at least one of the following information: a BAP address, a default uplink BAP routing identity, and an uplink default backhaul radio link control (BH RLC) channel.

Moreover, in at least some embodiments of Method 1, when an RRC message received by the IAB-MT of the node contains the first BAP configuration and this configuration is set to be a first value (for example, the first value is setup), if a BAP entity of the IAB-node has not yet been set up, the IAB-node sets up a BAP entity for the IAB-MT and the IAB-DU respectively. For example, the IAB-node sets up the first BAP entity for the IAB-MT and a DU BAP entity for the IAB-DU, wherein the first BAP entity and the DU BAP entity may be set up together.

In at least some embodiments of Method 1, by taking the addition of the second BAP configuration information to set up a second BAP entity as an example, a method for setting up the second BAP entity is described.

At the RRC layer of the node, the following operation is performed:
When the RRC reconfiguration message received by the IAB-MT contains the second BAP configuration information, if the second BAP configuration information is set to be a first value (for example, the first value is setup), and the second BAP entity has not been set up yet, the BAP layer is indicated to set up the second BAP entity corresponding to the second BAP configuration information at the MT side for the second IAB-DU.

At the BAP layer of the node, the following operation is performed:
After receiving an indication from the upper layer regarding the establishment of the second BAP entity, the second BAP entity is set up for the second IAB-DU at the MT side.

After the IAB-DU migration and handover of all terminal equipment (such as user equipment (UEs)) served by the IAB-DU are completed, all terminal equipment (user equipment (UEs)) are connected on the second IAB-DU (such as IAB-DU3b in FIG. 3). The original second IAB-DU may be converted to a first IAB-DU, and the original first IAB-DU may be converted to a second IAB-DU to prepare for a next DU migration during movement of the IAB-node. That is, the previous second IAB-DU is changed into a source IAB-DU. The previous first IAB-DU is changed into a target IAB-DU. In addition, the previous first IAB-DU (i.e., a current second IAB-DU formed after conversion) may further be released.

A method for release includes: an IAB-node performs autonomous release; or, an RRC layer may request release of a current second IAB-DU, that is, a network side notifies an IAB-MT to release the current second IAB-DU via RRC signaling.

For example, a process in which the RRC layer requests release of the current second IAB-DU is: when an RRC message received by the IAB-MT contains a second BAP configuration and this second BAP configuration is set to be a second value (for example the second value is "release"), the BAP layer may be indicated to release the second BAP entity, wherein the BAP layer releases the second BAP entity after receiving an indication from the upper layer regarding the release of the second BAP entity.

In at least some embodiments of Method 1, a behavior of the IAB-node when it receives an RRC reconfiguration (RRCReconfiguration) message containing the first BAP configuration and/or the second BAP configuration may be enhanced to implement the above-mentioned Method 1.

For example, Table 1 is an example of enhancement of a BAP configuration process of TS38.331.

**Table 1**

| The IAB-MT shall: | | |
|---|---|---|
| 1> if the *bap-Config* is set to *setup*: | | |
| | 2> if no BAP entity is established: | |
| | | 3> establish a BAP entity for the IAB-MT and a BAP entity for the IAB-DU as specified in TS 38.340 [47]; |
| | | ... |
| 1> if the *bap-Config2* is set to *setup*: | | |
| | 2> if no BAP entity is established for the IAB-MT function corresponding to the taree IAB-DU: | |
| | | 3> establish a BAP entity for the IAB-MT function corresponding to the target IAB-DU as specified in TS 38.340 [47]: |
| | | ... |
| 1> if the *bap-Config* is set to *release*, and if there is no other configured *bap-Config* for the MCG or for the SCG: | | |
| | 2> release the BAP entity for the IAB-MT and the BAP entity for the IAB-DU as specified in TS 38.340 [47]. | |
| 1> if the *bap-Config2* is set to *release*: | | |
| | 2> release the BAP entity for MT function corresponding to the target IAB-DU as specified in TS 38.340 [47]. | |

### Method 2:

In Method 2, the MT side of the IAB-node still uses the same BAP entity. The IAB-node saves a BAP configuration for the first IAB-DU and a BAP configuration for the second IAB-DU respectively in the F1AP, wherein the BAP configuration includes uplink traffic to routing ID mapping configuration and/or uplink traffic to BH RLC channel mapping configuration. It should be noted that these uplink backhaul configurations are used at the MT side.

In at least some embodiments of Method 2, variables for the second IAB-DU may be added to the BAP layer, and the BAP layer may maintain the variables for the second IAB-DU. The variables may be: a second uplink traffic to routing ID mapping configuration (for example, called Uplink Traffic to Routing ID Mapping Configuration2) and/or a second uplink traffic to BH RLC channel mapping configuration (for example, called Uplink Traffic to BH RLC Channel Mapping Configuration2).

The second uplink traffic to routing ID mapping configuration includes at least one traffic type specifier and at least one BAP routing identity. The second uplink traffic to BH RLC channel mapping configuration includes at least one traffic type specifier, at least one egress link identity and at least one egress BH RLC channel identity.

At the IAB-node, for a backhaul adaptation protocol service data unit (BAP SDU) received from an upper layer and to be transmitted in an upstream direction, the BAP entity performs mapping to a BAP address and a BAP path identity based on the following configuration variables:
first uplink traffic to routing ID mapping configuration, the configuration being derived from F1AP signaling on the IAB-node, the F1AP signaling including no signaling on the second IAB-DU; and
second uplink traffic to routing ID mapping configuration (for example, called Uplink Traffic to Routing ID Mapping Configuration2), the configuration being derived from F1AP signaling on the second IAB-DU.

For data transmitted in the upstream direction, the data may come from different logical IAB-DUs. For example, when all UEs have not yet completed handover, some terminal equipment (such as UEs) are still in the first IAB-DU, while some UEs have been handed over to the second IAB-DU, the data in the upstream direction needs to select different mapping configurations for corresponding IAB-DUs, thereby to select a routing identity configured by a CU to which UEs belong.

At the IAB-node, for the BAP SDU received from the upper layer and to be transmitted in an upstream direction, the BAP entity may further perform the following operation:
for a BAP SDU encapsulating an F1-U packet, if the BAP SDU is from the second IAB-DU, selecting a corresponding entry in the second uplink traffic to routing ID mapping configuration based on a traffic type specifier to which a destination IP address and a tunnel endpoint identifier (TEID) correspond.

The following Table 2 is an example of enhancement of a BAP routing identity selection by the IAB-node of TS38.340 in Method 2.

**Table 2**

| | | |
|---|---|---|
| At an IAB-node, for a BAP SDU received from upper layers and to be transmitted in upstream direction, the BAP entity performs mapping to a BAP address and BAP path identity based on: | | |
| - Uplink Traffic to Routing ID Mapping Configuration, which is derived from F1AP on the IAB-node except for the target logical IAB-DU in TS 38.473 [5], | | |
| - Uplink Traffic to Routing ID Mapping Configuration2. which is derived from F1AP on the target logical IAB-DU in TS 38.473 [5]. | | |
| | ... | |
| At the IAB-node, for a BAP SDU received from upper layers and to be transmitted in upstream direction, the BAP entity shall: | | |
| | - if the Uplink Traffic to Routing ID Mapping Configuration has not been (re)configured by F1AP after the last (re)configuration of *defaultUL-BAP-RoutingID* by RRC: | |
| | - | select the BAP address and the BAP path identity as configured by *defaultUL-BAP-RoutingID* in TS 38.331 [3] for non-F1-U packets; |
| | - else: | |
| | - for the BAP SDU encapsulating an F1-U packet: | |
| | | - if this BAP SDU is from the target logical IAB-DU: |
| - select an entry from the Uplink Traffic to Routing ID Mapping Configuration2 with its traffic type specifier corresponds to the destination IP address and TEID of this BAP SDU: | | |
| | - else: | |
| | | - select an entry from the Uplink Traffic to Routing ID Mapping Configuration with its traffic type specifier corresponds to the destination IP address and TEID of this BAP SDU; |
| | ... | |

The above text describes the selection processing for the BAP routing identity in Method 2. The processing of uplink BH RLC channel mapping is similar.

At the IAB-node, for a BAP SDU received from the upper layer and to be transmitted in an upstream direction, the BAP entity performs mapping to an egress BH RLC channel identity based on the following configuration variables:
first uplink traffic to BH RLC channel mapping configuration (Uplink Traffic to BH RLC Channel Mapping Configuration), the configuration being derived from F1AP signaling on the IAB-node, the F1AP signaling including no signaling on the second IAB-DU; and
second uplink traffic to BH RLC channel mapping configuration (for example, called Uplink Traffic to BH RLC Channel Mapping Configuration2), the configuration being derived from F1AP signaling on the second IAB-DU.

At the IAB-node, for a BAP SDU received from an upper layer and to be transmitted in an upstream direction, after an egress link is selected, the BAP entity may further perform the following operation:
for a BAP SDU encapsulating an F1-U packet, if the BAP SDU is from the second IAB-DU, selecting a corresponding entry in the second uplink traffic to routing ID mapping configuration based on a traffic type specifier to which a destination IP address and a TEID correspond and a link identity to which the selected egress link corresponds; if the corresponding entry exists, selecting an egress BH RLC channel corresponding to the egress BH RLC channel identity in the entry, and if the corresponding entry is not found, selecting any egress BH RLC channel on the egress link.

Embodiments of the first aspect solve problems such as BAP configuration of multiple logical IAB-DUs of an IAB-node in the case of DU migration, thereby being capable of supporting long-distance movement of the IAB-node and improving the performance of users (such as users on automobiles or trains) served by the IAB-node.

### Embodiments of a second aspect

IAB-MT is configured by RRC with first default BAP configurations, these configurations include a first default uplink BAP routing identity (defaultUL-BAP-RoutingID) and a first default uplink BH RLC channel (defaultUL-BH-RLC-Channel). These default BAP configurations are used for an uplink non-F1-U packet until the F1AP configures or reconfigures the first uplink traffic to routing ID mapping configuration and the first uplink traffic to BH RLC channel mapping configuration.

When the IAB-node sets up a second IAB-DU, whether to use a common default BAP configuration for non-F1-U is a problem that needs to be clarified.

In order to solve said problem, embodiments of the second aspect of the present application provide a method for transmitting and receiving a signal, applicable to an IAB-node, such as IAB-node 3 shown in FIG. 3 (for example the IAB-node 3 has IAB-MT3, IAB-DU3a and IAB-DU3b), and in the following description, it is referred to as the IAB-node or the node.

In the embodiments of the second aspect, the first distributed unit (such as IAB-DU3a in FIG. 3) is controlled by the first donor central unit (such as Donor-CU1 in FIG. 3), and the second distributed unit (such as IAB-DU3b in FIG. 3) is controlled by the second donor central unit (such as Donor-CU2 in FIG. 3).

The first donor central unit is an F1 terminating donor central unit of the node in a case where migration of a distributed unit is not performed, or a source donor central unit during a process of migration of a distributed unit; the second donor central unit is a target donor central unit during a process of migration of a distributed unit.

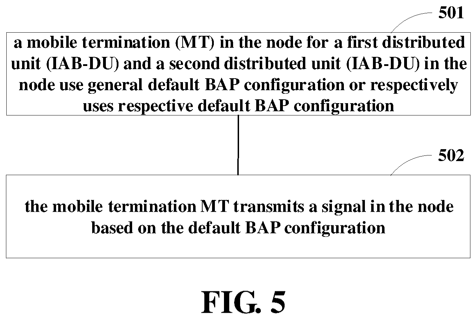

FIG. 5 is a schematic diagram of a method for transmitting and receiving a signal in the embodiments of a second aspect. As shown in FIG. 5, the method includes:
501, a mobile termination (MT) in the node for a first distributed unit (IAB-DU) and a second distributed unit (IAB-DU) in the node use common default BAP configuration or respectively uses respective default BAP configuration; and
502, the mobile termination MT transmits a signal in the node based on the default BAP configuration.

In Method 1 of the operation 501, the common default BAP configuration is used for the first distributed unit (IAB-DU) and the second distributed unit (IAB-DU) in the node.

In at least some embodiments of Method 1, at the IAB-node, for the BAP SDU received from the upper layer and to be transmitted in an upstream direction, the BAP entity may perform the following operation:
if F1AP has not performed first uplink traffic to routing ID mapping configuration or reconfiguration on the IAB-DU from which the BAP SDU comes after the RRC layer configures a first default uplink BAP routing identity, selecting a BAP address and a BAP path identity configured in the first default uplink BAP routing identity for a non-F1-U packet.

In at least some embodiments of Method 1, at the IAB-node, for a BAP SDU received from an upper layer and to be transmitted to an upstream direction, after an egress link is selected, the BAP entity may perform the following operation:
if F1AP has not performed first uplink traffic to BH RLC channel mapping configuration or reconfiguration on the IAB-DU from which the BAP SDU comes after the RRC layer configures a first default uplink BH RLC channel identity, selecting an egress BH RLC channel to which the first default uplink BH RLC channel identity corresponds for a non-F1-U packet.

In Method 2 of the operation 501, the respective default BAP configuration is respectively used for the first distributed unit (IAB-DU) and the second distributed unit (IAB-DU) in the node. For example, the non-F1-U data corresponding to the first IAB-DU uses the first default BAP configuration; the second default BAP configuration is defined for the second IAB-DU, and the non-F1-U data corresponding to the second IAB-DU uses the second default BAP configuration.

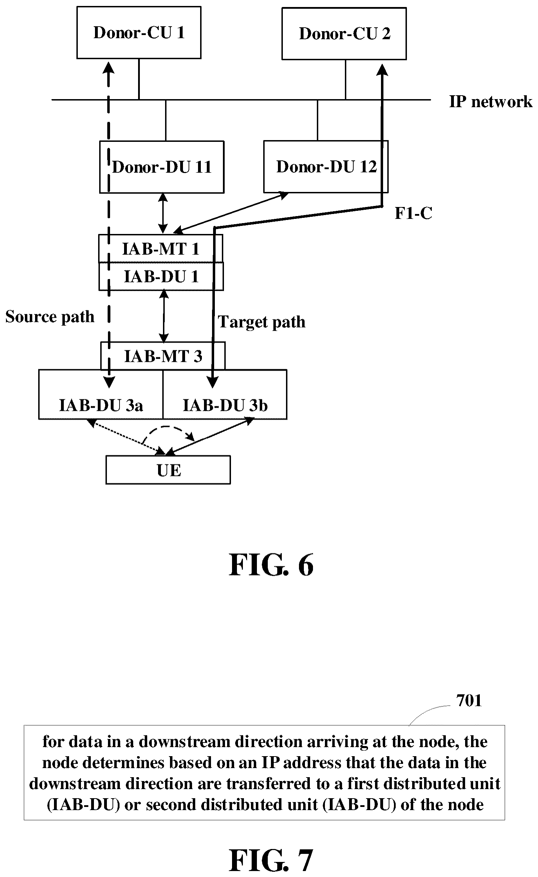

FIG. 6 is a schematic diagram of DU migration. In the scenario shown in FIG. 6, the target path used from the second IAB-DU (i.e., IAB-DU3b) to the second donor-CU (i.e., Donor-CU2) passes through Donor-DU12; the source path from the first IAB-DU (i.e., IAB-DU3a) to the first donor-CU (i.e., Donor-CU1) passes through Donor-DUll; Donor-DU12 is different from Donor-DUll. Because a BAP destination (i.e., donor-DU) has changed, BAP routing identities of the target path and the source path are also different.

Under the scenario shown in FIG. 6, the second default BAP configuration is different from the first default BAP configuration. Therefore, uplink non-F1-U traffics corresponding to two IAB-DUs (such as IAB-DU3a and IAB-DU3b) may use different default paths.

In at least some embodiments of Method 2, the second BAP default configuration may be added to an RRC message, and the second BAP default configuration may include a second default uplink BAP routing identity and a second default uplink BH RLC channel.

For example, two fields may be added to a bap-Config IE in an RRC reconfiguration (such as RRCReconfiguration) message, for example are called defaultUL-BAP-RoutingID2 and defaultUL-BH-RLC-Channel2. An indication may further be added in the bap-Config IE, indicating whether its default configuration is used for non-F1-U (such as F1-C) traffic corresponding to the first IAB-DU or the second IAB-DU. A new IE may further be added in the RRCReconfiguration message, for example is called bap-Config2 and includes the second BAP default configuration.

In at least some embodiments of Method 2, at the IAB-node, for the BAP SDU received from the upper layer and to be transmitted in an upstream direction, the BAP entity may perform the following operation:
if a traffic is related to the second IAB-DU, the second default uplink BAP routing identity is configured and F1AP does not perform uplink traffic to routing ID mapping configuration or reconfiguration for the second IAB-DU after the last configuration or reconfiguration of the second default uplink BAP routing identity by RRC, selecting a BAP address and a BAP path identity configured in the second default uplink BAP routing identity for a non-F1-U packet.

In at least some embodiments of Method 2, at the IAB-node, for a BAP SDU received from an upper layer and to be transmitted in an upstream direction, after an egress link is selected, the BAP entity may further perform the following operation:
if a traffic is related to the second IAB-DU, the second default uplink BH RLC channel is configured and F1AP does not perform first uplink traffic to BH RLC channel mapping configuration or reconfiguration on the second IAB-DU after RRC configures a second default uplink BH RLC channel, selecting an egress BH RLC channel to which a second default uplink BH RLC channel identity corresponds for a non-F1-U packet.

### Embodiments of a third aspect

In a case where two or more IAB-DUs are set up at an IAB-node, for processing of data in a downstream direction arriving at the IAB-node, how to distinguish which IAB-DU to which the data needs to be transmitted, thereby to be transmitted to a terminal equipment (such as a user equipment (UE)) served by the DU, is a problem that needs to be solved.

In order to solve said problem, embodiments of the third aspect of the present application provide a method for transmitting and receiving a signal, applicable to an IAB-node, such as IAB-node 3 shown in FIG. 3 (for example the IAB-node 3 has IAB-MT3, IAB-DU3a and IAB-DU3b), and in the following description, it is referred to as the IAB-node or the node.

In the embodiments of the third aspect, the first distributed unit (such as IAB-DU3a in FIG. 3) is controlled by the first donor central unit (such as Donor-CU1 in FIG. 3), and the second distributed unit (such as IAB-DU3b in FIG. 3) is controlled by the second donor central unit (such as Donor-CU2 in FIG. 3).

The first donor central unit is an F1 terminating donor central unit of the node in a case where migration of a distributed unit is not performed, or a source donor central unit during a process of migration of a distributed unit; the second donor central unit is a target donor central unit during a process of migration of a distributed unit.

FIG. 7 is a schematic diagram of a method for transmitting and receiving a signal in the embodiments of a third aspect. As shown in FIG. 7, the method includes:
701, for data in a downstream direction arriving at the node, the node determines based on an IP address that the data in the downstream direction are transferred to a first distributed unit (IAB-DU) or second distributed unit (IAB-DU) of the node.

In the operation 701, the IP address may be a target IP address or a source IP address.

In Method 1 of the operation 701, the node determines based on a target IP address that the data in the downstream direction are transferred to the first distributed unit (IAB-DU) or second distributed unit (IAB-DU) of the node.

In at least some embodiments of Method 1, an IP address different from that of the first IAB-DU may be allocated to the second IAB-DU. For example, when the IAB-node requests an IP address from a donor-CU via RRC, it includes a purpose of usage of the IP address, a new purpose of usage may be defined, such as being called second IAB-DU use. This enables the donor-CU to know that what is requested is an IP address used by the second IAB-DU. When the donor-CU allocates an IP address to the IAB-node via an RRC message, it will include a corresponding purpose of usage (iab-IP-Usage) of the IP address. If an RRC message received by the IAB-node contains an assigned IP address (for example, included in iab-IP-AddressToAddModList IE) and a corresponding purpose of usage is indicated as being used by the second IAB-DU, the IAB-node saves the IP address as an IP address of the second IAB-DU, or replaces an existing IP address of the second IAB-DU (if it is configured).

In at least some embodiments of Method 1, when a BAP data PDU (protocol data unit) is received from a lower layer, the reception portion of the BAP entity may perform the following operations:
if a destination field of the BAP data PDU matches with a BAP address configured by an IAB-donor providing the ingress BH RLC channel, removing a BAP header of the BAP data PDU and submitting the BAP SDU to an upper layer; deciding by the upper layer based on the target IP address of the BAP SDU to transfer the BAP SDU to which DU. That is, if the target IP address belongs to the first IAB-DU, transferring the BAP SDU to the first IAB-DU; if the target IP address belongs to the second IAB-DU, transferring the BAP SDU to the second IAB-DU.

In Method 2 of the operation 701, the node determines based on a source IP address to transfer the data in the downstream direction to the first distributed unit (IAB-DU) or second distributed unit (IAB-DU) of the node.

Source IP address of F1 data is an IP address of the donor-CU. Because two IAB-DUs are terminated to different donor-CUs, which DU is a destination of downlink data may be known via the source IP address.

In at least some embodiments of Method 2, when a BAP data PDU (protocol data unit) is received from a lower layer, the reception portion of the BAP entity may perform the following operations:
if a destination field of the BAP data PDU matches with a BAP address configured by an IAB-donor providing the ingress BH RLC channel, removing a BAP header of the BAP data PDU and submitting the BAP SDU to an upper layer; deciding by the upper layer based on the source IP address of the BAP SDU to transfer the BAP SDU to which DU. That is, if the source IP address belongs to the first donor-CU, transferring the BAP SDU to the first IAB-DU, and if the source IP address belongs to the second donor-CU, transferring the BAP SDU to the second IAB-DU.

### Embodiments of a fourth aspect

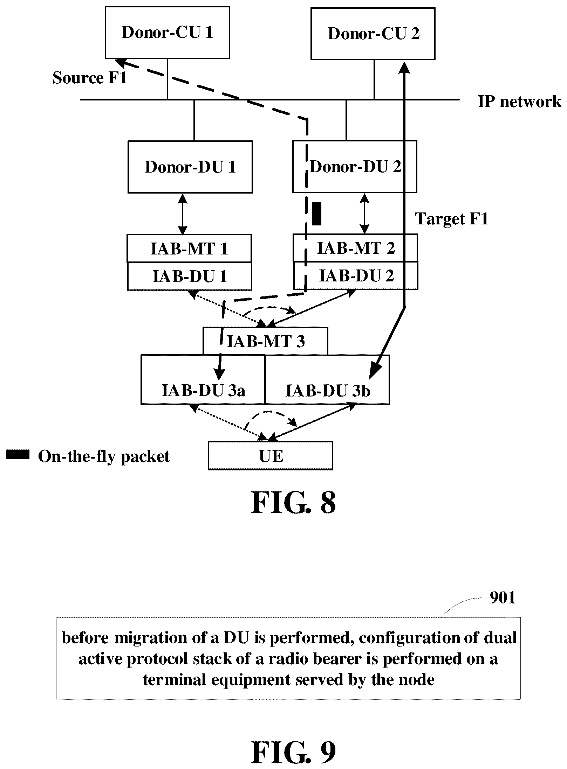

During the DU migration process, it is necessary to migrate, for example, all F1 associations, F1-U tunnels, and all UE context information, so the migration process is relatively long. In a case where the mobile IAB-node is connected to a donor node via multiple hops, service disruption is very likely to occur. FIG. 8 is a schematic diagram at the time of UE handover. As shown in FIG. 8, after the UE is handed over to donor-CU2, some downlink data arrives at the IAB-node from the source path, these downlink data are called on-the-fly data. When the IAB-node receives these downlink data, since the UE has completed the handover, these data cannot be transmitted correctly to the UE. This will lead to loss of data packets during handover, thereby causing service interruption.

In order to solve said problem, embodiments of the fourth aspect of the present application provide a method for transmitting and receiving a signal, applicable to an IAB-node, such as IAB-node 3 shown in FIG. 3 (for example the IAB-node 3 has IAB-MT3, IAB-DU3a and IAB-DU3b), and in the following description, it is referred to as the IAB-node or the node.

In the embodiments of the fourth aspect, the first distributed unit (such as IAB-DU3a in FIG. 3) is controlled by the first donor central unit (such as Donor-CU1 in FIG. 3), and the second distributed unit (such as IAB-DU3b in FIG. 3) is controlled by the second donor central unit (such as Donor-CU2 in FIG. 3).

The first donor central unit is an F1 terminating donor central unit of the node in a case where migration of a distributed unit is not performed, or a source donor central unit during a process of migration of a distributed unit; the second donor central unit is a target donor central unit during a process of migration of a distributed unit.

FIG. 9 is a schematic diagram of a method for transmitting and receiving a signal in the embodiments of a fourth aspect. As shown in FIG. 9, the method includes:
901, before migration of a DU is performed, configuration of dual active protocol stack of a radio bearer is performed on a terminal equipment served by the node.

In at least some embodiments of the operation 901, all radio bearers of terminal equipment (such as user equipment (UEs)) served by the node may be configured as dual active protocol stack (DAPS) bearers. Thereby, the terminal equipment (such as user equipment (UE)) may connect simultaneously with two IAB-DUs (such as the first IAB-DU and the second IAB-DU) via DAPS bearers, thereby receives downlink data transmitted by two donor-CUs (such as the first donor-CU and the second donor-CU), this may effectively reduce service interruption during handover.

In at least some embodiments, the node is configured by RRC to perform configuration of dual active protocol stack of a radio bearer. That is, a network side configures radio bearers of the node as dual active protocol stack bearers via RRC signaling.

### Embodiments of a fifth aspect

Embodiments of a fifth aspect of the present disclosure provide an apparatus for transmitting and receiving a signal, corresponding to the method for transmitting and receiving a signal in the embodiments of the first aspect. The apparatus is applicable to an IAB-node.

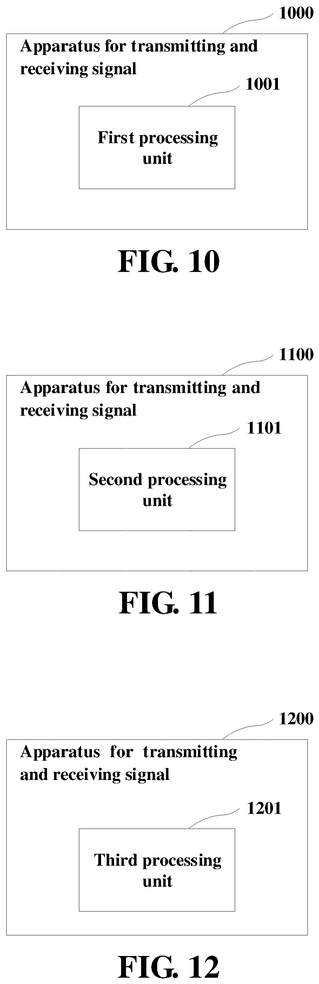

FIG. 10 is a schematic diagram of an apparatus for transmitting and receiving a signal in the embodiments of a fifth aspect. As shown in FIG. 10, an apparatus 1000 for transmitting and receiving a signal includes a first processing unit 1001, the first processing unit controlling the node to enable the node to execute the following operations:
configuring a first distributed unit (IAB-DU) and a second distributed unit (IAB-DU) in the node respectively with uplink backhaul mapping information by different donor central units; and
transmitting a signal by a mobile termination of the node according to the uplink backhaul mapping information.

In at least one embodiment, the first processing unit controls the node to execute the following operation:
setting up a second backhaul adaptation protocol (BAP) entity different from a first BAP entity in the node, wherein the first BAP entity maintains a variable, configured by a first donor central unit (donor-CU), of a BAP layer of the node, and the second BAP entity maintains a variable, configured by a second donor central unit, of the BAP layer of the node.

In at least one embodiment, the second BAP entity stores or uses uplink traffic to routing ID mapping configuration and uplink traffic to BH RLC channel mapping configuration associated with F1 configured by the second donor central unit.

In at least one embodiment, the first processing unit controls the node to execute the following operation:
for data transmission in an upstream direction, selecting a corresponding first BAP entity or second BAP entity by the node according to a DU to which traffics of the data transmission belong.

In at least one embodiment, the DU to which the traffics belong is determined by determining a DU from which a backhaul adaptation protocol service data unit (BAP SDU) received from an upper layer comes; or
the DU to which the traffics belong is determined by a donor central unit (donor-CU) to which a target IP address of a BAP SDU received from an upper layer corresponds.

In at least one embodiment, the first processing unit controls the node to execute the following operation:
receiving second configuration information by a radio resource control (RRC) layer of the node, the second configuration information being used to configure the second BAP entity.

In at least one embodiment, the second configuration information is a newly added information element (IE) in an RRC reconfiguration message,
and the second configuration information includes at least one piece of the following information for a DU to which the second BAP entity corresponds: a BAP address, a default uplink BAP routing identity, or an uplink default backhaul radio link control (BH RLC) channel.

In at least one embodiment, when an RRC message received by the node includes the second BAP configuration information and the second BAP configuration information is set to be a first value, if the second BAP entity of the node has not yet been set up, the node sets up the second BAP entity corresponding to the second BAP configuration information at a mobile termination (IAB-MT) side.

In at least one embodiment, the BAP layer of the node set up the second BAP entity after receiving an indication for setting up the second BAP entity from the upper layer.

In at least one embodiment, when all terminal equipments under the node are handed over to access at the second IAB-DU,
the second IAB-DU is converted into the first IAB-DU,
and the original first IAB-DU is converted into the second IAB-DU.

In at least one embodiment, the first processing unit controls the node to execute the following operation:
releasing the second BAP entity.

In at least one embodiment, when the RRC message received by the node includes the second BAP configuration information and the second BAP configuration information is set to be a second value, the second BAP entity is released.

In at least one embodiment, after the node receives an indication for releasing the second BAP entity from the upper layer, the BAP layer releases the second BAP entity.

In at least one embodiment, when the RRC message received by the node includes first BAP configuration and the configuration is set to be a first value, if the BAP entity of the node is not set up, the node sets up BAP entities respectively for the mobile termination (IAB-MT) and first distributed unit (IAB-DU) of the node.

In at least one embodiment, the first processing unit controls the node to execute the following operation:
respectively saving BAP configuration for the first IAB-DU and BAP configuration for the second IAB-DU of F1AP by the node.

In at least one embodiment, the BAP configuration includes uplink traffic to routing ID mapping configuration and/or uplink traffic to BH RLC channel mapping configuration.

In at least one embodiment, the BAP layer maintains a variable for the second IAB-DU.

In at least one embodiment, the variable includes:
second uplink traffic to routing ID mapping configuration and/or second uplink traffic to BH RLC channel mapping configuration.

In at least one embodiment, the second uplink traffic to routing ID mapping configuration includes a traffic type specifier and a BAP routing identity; or
the second uplink traffic to BH RLC channel mapping configuration includes a traffic type specifier, an egress link identity and an egress BH RLC channel identity.

In at least one embodiment, at the node, for a backhaul adaptation protocol service data unit (BAP SDU) received from an upper layer and to be transmitted to an upstream direction, the BAP entity performs mapping to the BAP address and a BAP path identity based on the following configuration variables:
first uplink traffic to routing ID mapping configuration, the configuration being derived from F1AP signaling on the node, the F1AP signaling including no signaling on the second IAB-DU; and
second uplink traffic to routing ID mapping configuration, the configuration being derived from F1AP signaling on the second IAB-DU.

In at least one embodiment, at the node, for the BAP SDU received from the upper layer and to be transmitted in an upstream direction, the BAP entity further performs the following operation:
for a BAP SDU encapsulating an F1-U packet, if the BAP SDU is from the second IAB-DU, selecting a corresponding entry in the second uplink traffic to routing ID mapping configuration based on a traffic type specifier to which a destination IP address and a tunnel endpoint identifier (TEID) correspond.

In at least one embodiment, at the node, for a BAP SDU received from the upper layer and to be transmitted in an upstream direction, the BAP entity performs mapping to an egress BH RLC channel identity based on the following configuration variables:
first uplink traffic to BH RLC channel mapping configuration, the configuration being derived from F1AP signaling on the node, the F1AP signaling including no signaling on the second IAB-DU; and
second uplink traffic to BH RLC channel mapping configuration, the configuration being derived from F1AP signaling on the second IAB-DU.

In at least one embodiment, at the node, for a BAP SDU received from an upper layer and to be transmitted in an upstream direction, after an egress link is selected, the BAP entity further performs the following operation:
for a BAP SDU encapsulating an F1-U packet, if the BAP SDU is from the second IAB-DU, selecting a corresponding entry in the second uplink traffic to routing ID mapping configuration based on a traffic type specifier to which a destination IP address and a TEID correspond and a link identity to which the selected egress link corresponds,
if an entry exists, selecting an egress BH RLC channel to which an egress BH RLC channel identity in the entry corresponds,
and if no corresponding entry is found, selecting any egress BH RLC channel on the egress link.

In at least one embodiment, the first distributed unit is controlled by the first donor central unit,
and the second distributed unit is controlled by the second donor central unit.

In at least one embodiment, the first donor central unit is an F1 terminating donor central unit of the node in a case where migration of a distributed unit is not performed, or a source donor central unit during a process of migration of a distributed unit,
and the second donor central unit is a target donor central unit of the node during the process of migration of a distributed unit.

### Embodiments of a sixth aspect

Embodiments of a sixth aspect of the present disclosure provide an apparatus for transmitting and receiving a signal. The apparatus is applicable to an IAB-node, and corresponds to the method for transmitting and receiving a signal in the embodiments of the second aspect.

FIG. 11 is a schematic diagram of an apparatus for transmitting and receiving a signal in the embodiments of a sixth aspect. As shown in FIG. 11, an apparatus 1100 includes a second processing unit 1101.

The second processing unit 1101 controls the node to execute the following operations:
using general default BAP configuration or respectively using respective default BAP configuration by a mobile termination (MT) in the node for a first distributed unit (IAB-DU) and a second distributed unit (IAB-DU) in the node; and
transmitting a signal by the mobile termination MT in the node based on the default BAP configuration.

In at least one embodiment, in a case where a general default BAP configuration is used for the first distributed unit (IAB-DU) and the second distributed unit (IAB-DU) in the node,
at the node, for the BAP SDU received from the upper layer and to be transmitted in an upstream direction, the BAP entity performs the following operation:
if F1AP does not perform first uplink traffic to routing ID mapping configuration or reconfiguration on the IAB-DU from which the BAP SDU comes after the RRC layer configures a first default uplink BAP routing identity, selecting a BAP address and a BAP path identity configured in the first default uplink BAP routing identity for a non-F1-U packet.

In at least one embodiment, in a case where a general default BAP configuration is used for the first distributed unit (IAB-DU) and the second distributed unit (IAB-DU) in the node,
at the node, for a BAP SDU received from an upper layer and to be transmitted in an upstream direction, after an egress link has been selected, the BAP entity further performs the following operation:
if F1AP does not perform first uplink traffic to BH RLC channel mapping configuration or reconfiguration on the IAB-DU from which the BAP SDU comes after the RRC layer configures a first default uplink BH RLC channel identity, selecting an egress BH RLC channel to which the first default uplink BH RLC channel identity corresponds for a non-F1-U packet.

In at least one embodiment, in a case where the respective default BAP configuration is respectively used for the first distributed unit (IAB-DU) and the second distributed unit (IAB-DU) in the node,
a second default BAP configuration is defined for the second IAB-DU,
non-F1-U data to which the first IAB-DU corresponds use the first default BAP configuration,
and non-F1-U data to which the second IAB-DU corresponds use the second default BAP configuration.

In at least one embodiment, the second BAP default configuration is set in an RRC message,
and the second BAP default configuration includes a second default uplink BAP routing identity and a second default uplink BH RLC channel.

In at least one embodiment, at the node, for the BAP SDU received from the upper layer and to be transmitted in an upstream direction, the BAP entity performs the following operation:
if a traffic is related to the second IAB-DU, the second default uplink BAP routing identity is configured and F1AP does not perform uplink traffic to routing ID mapping configuration or reconfiguration for the second IAB-DU after the last configuration or reconfiguration of the second default uplink BAP routing identity by RRC, selecting a BAP address and a BAP path identity configured in the second default uplink BAP routing identity for a non-F1-U packet.

In at least one embodiment, at the node, for a BAP SDU received from an upper layer and to be transmitted in an upstream direction, after an egress link is selected, the BAP entity further performs the following operation:
if a traffic is related to the second IAB-DU, the second default uplink BH RLC channel is configured and F1AP does not perform first uplink traffic to BH RLC channel mapping configuration or reconfiguration for the second IAB-DU after configuration of a second default uplink BH RLC channel by RRC, selecting an egress BH RLC channel to which a second default uplink BH RLC channel identity corresponds for a non-F1-U packet.

In at least one embodiment, the first distributed unit is controlled by the first donor central unit,
and the second distributed unit is controlled by the second donor central unit.

In at least one embodiment, the first donor central unit is an F1 terminating donor central unit of the node in a case where migration of a distributed unit is not performed, or a source donor central unit during a process of migration of a distributed unit,
and the second donor central unit is a target donor central unit of the node during the process of migration of a distributed unit.

### Embodiments of a seventh aspect

Embodiments of a seventh aspect provide an apparatus for transmitting and receiving a signal, the apparatus is applicable to an IAB-node and corresponds to the method for transmitting and receiving a signal in the embodiments of the third aspect.

FIG. 12 is a schematic diagram of an apparatus for transmitting and receiving a signal in the embodiments of a seventh aspect. As shown in FIG. 12, an apparatus 1200 includes a third processing unit 1201, the third processing unit 1201 controls the node to execute the following operation:
for data in a downstream direction arriving at the node, determining by the node based on an IP address that the data in the downstream direction are transferred to a first distributed unit (IAB-DU) or second distributed unit (IAB-DU) of the node.

In at least one embodiment, the node determines based on a target IP address that the data in the downstream direction are transferred to the first distributed unit (IAB-DU) or second distributed unit (IAB-DU) of the node.

In at least one embodiment, the third processing unit controls the node to execute the following operation:
when the node requests an IP address from a donor central unit (donor-CU) via RRC, a purpose of usage of the IP address is included, the purpose of usage being used to indicate that the IP address is used by the second distributed unit (IAB-DU).

In at least one embodiment, if an RRC message received by the node contains an assigned IP address and a corresponding purpose of usage is indicated as being used by the second distributed unit (IAB-DU), the node saves the IP address as an IP address of the second IAB-DU.

In at least one embodiment, when a BAP data protocol data unit (PDU) is received from a lower layer, a reception portion of a BAP entity performs the following operations:
if a destination field of the BAP data PDU matches with a BAP address configured by an IAB-donor providing an ingress BH RLC channel, removing a BAP header of the BAP data PDU and submitting the BAP SDU to an upper layer; and
deciding by the upper layer based on the target IP address of the BAP SDU to transfer the BAP SDU to the first distributed unit (IAB-DU) or the second distributed unit (IAB-DU).

In at least one embodiment, the node determines based on a source IP address to transfer the data in the downstream direction to the first distributed unit (IAB-DU) or second distributed unit (IAB-DU) of the node.

In at least one embodiment, when a BAP data PDU (protocol data unit) is received from a lower layer, the reception portion of the BAP entity performs the following operations:
if a destination field of the BAP data PDU matches with a BAP address configured by an IAB-donor providing an ingress BH RLC channel, removing a BAP header of the BAP data PDU and submitting the BAP SDU to an upper layer; and
deciding by the upper layer based on the source IP address of the BAP SDU to transfer the BAP SDU to the first distributed unit (IAB-DU) or the second distributed unit (IAB-DU).

In at least one embodiment, the first distributed unit is controlled by the first donor central unit,
and the second distributed unit is controlled by the second donor central unit.

In at least one embodiment, the first donor central unit is an F1 terminating donor central unit of the node in a case where migration of a distributed unit is not performed, or a source donor central unit during a process of migration of a distributed unit,
and the second donor central unit is a target donor central unit of the node during the process of migration of a distributed unit.

### Embodiments of an eighth aspect

Embodiments of an eighth aspect provide an apparatus for transmitting and receiving a signal, the apparatus is applicable to an IAB-node and corresponds to the method for transmitting and receiving a signal in the embodiments of the fourth aspect.

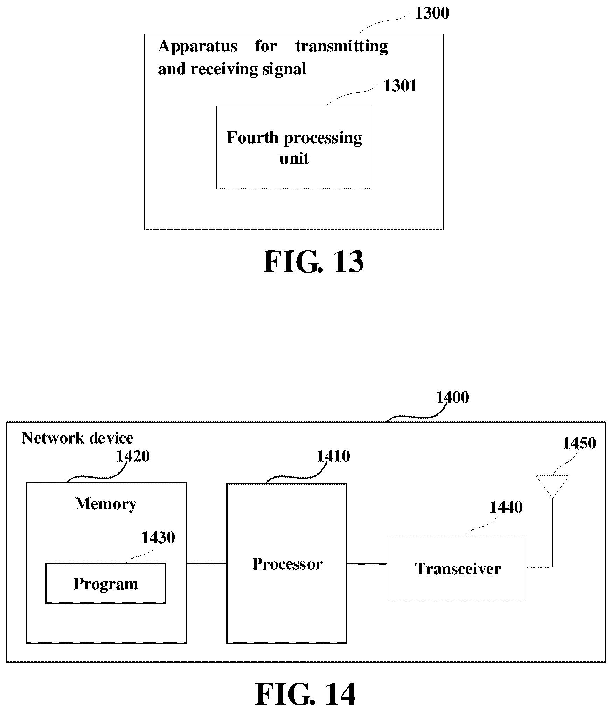

FIG. 13 is a schematic diagram of an apparatus for transmitting and receiving a signal in the embodiments of an eighth aspect. As shown in FIG. 13, an apparatus 1300 includes a fourth processing unit 1301, the fourth processing unit 1301 controls the node to execute the following operation:
before migration of a DU is performed, performing configuration of dual active protocol stack (DAPS) of a radio bearer on a terminal equipment served by the node,
wherein radio bearers of all terminal equipments served by the node are configured as DAPS bearers.

### Embodiments of a ninth aspect

Embodiments of the present disclosure further provide a communication system, which may include an IAB-node and a donor central unit CU. At least one of a MT of the IAB-node, a DU of the IAB-node, and the CU may have the composition of the electronic device shown in FIG. 14.

FIG. 14 is a schematic diagram of composition of an electronic device in the embodiments of the present disclosure. As shown in FIG. 14, the terminal equipment 1400 may include: a processor 1410 (such as a central processing unit (CPU)) and a memory 1420; the memory 1420 is coupled to the processor 1410. The memory 1420 may store various data; moreover, further stores a program 1430 for information processing, and executes the program 1430 under the control of the processor 1410.

For example, the processor 1410 may be configured to execute a program to control electronic device to implement the method in the embodiments of the first to fourth aspects.

In addition, as shown in FIG. 14, the electronic device 1400 may further include: a transceiver 1440 and an antenna 1450, etc., wherein the functions of said components are similar to relevant arts, which are not repeated here. It's worth noting that the electronic device 1400 does not have to include all the components shown in FIG. 14. Moreover, the electronic device 1400 may also include components not shown in FIG. 14, related arts may be referred to.

Embodiments of the present disclosure further provide a computer program, wherein when the program is executed in an IAB-node, the program enables the IAB-node to execute the method as described in the embodiments of the first to fourth aspects.

Embodiments of the present disclosure further provide a storage medium in which a computer program is stored, wherein the computer program enables a terminal equipment to execute the method described in the embodiments of the first aspect to the fourth aspect.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

As for the implementations including the above embodiments, the following supplements are further disclosed:

### Method in the embodiments of the first aspect

1. A method for transmitting and receiving a signal, applicable to an integrated access and backhaul (IAB) node, the method including:
   configuring a first distributed unit (IAB-DU) and a second distributed unit (IAB-DU) in the node respectively with uplink backhaul mapping information by different donor central units; and
   transmitting a signal by a mobile termination of the node according to the uplink backhaul mapping information.
2. The method according to supplement 1, wherein the method further includes:
   setting up a second backhaul adaptation protocol (BAP) entity different from a first BAP entity in the node,
   wherein,
   the first BAP entity maintains variables configured by a first donor central unit (donor CU), of a BAP layer of the node,
   and the second BAP entity maintains variables, configured by a second donor central unit, of the BAP layer of the node.
3. The method according to supplement 2, wherein,
   the second BAP entity stores or uses uplink traffic to routing ID mapping configuration and uplink traffic to BH RLC channel mapping configuration associated with F1 configured by the second donor central unit.
4. The method according to supplement 2, wherein the method further includes:
   for data transmission in an upstream direction, selecting a corresponding first BAP entity or second BAP entity by the node according to a DU to which traffics of the data transmission belong.
5. The method according to supplement 4, wherein,
   the DU to which the traffics belong is determined by determining a DU from which a backhaul adaptation protocol service data unit (BAP SDU) received from an upper layer comes; or
   the DU to which the traffics belong is determined by a donor central unit (donor-CU) to which a target IP address of a BAP SDU received from an upper layer corresponds.
6. The method according to supplement 2, wherein the method includes:
   receiving second configuration information by a radio resource control (RRC) layer of the node, the second configuration information being used to configure the second BAP entity.
7. The method according to supplement 6, wherein,
   the second configuration information is a newly added information element (IE) in an RRC reconfiguration message,
   and the second configuration information includes at least one piece of the following information for a DU to which the second BAP entity corresponds: a BAP address, a default uplink BAP routing identity, or an uplink default backhaul radio link control (BH RLC) channel.
8. The method according to supplement 6, wherein,
   when an RRC message received by the node includes the second BAP configuration information and the second BAP configuration information is set to be a first value, if the second BAP entity of the node is not set up, the node sets up the second BAP entity corresponding to the second BAP configuration information at a mobile termination (IAB-MT) side.
9. The method according to supplement 8, wherein,
   the BAP layer of the node sets up the second BAP entity after receiving an indication for setting up the second BAP entity from the upper layer.
10. The method according to supplement 2, wherein,
   when all terminal equipment under the node are handed over to access at the second IAB-DU,
   the second IAB-DU is converted into the first IAB-DU,
   and the original first IAB-DU is converted into the second IAB-DU.
11. The method according to supplement 10, wherein the method further includes:
   releasing the second BAP entity.
12. The method according to supplement 11, wherein,
   when the RRC message received by the node includes the second BAP configuration information and the second BAP configuration information is set to be a second value, the second BAP entity is released.
12a. The method according to supplement 11, wherein,
   after the node receives an indication for releasing the second BAP entity from the upper layer, the BAP layer releases the second BAP entity.
13. The method according to supplement 2, wherein,
   when the RRC message received by the node includes first BAP configuration and the configuration is set to be a first value, if the BAP entity of the node is not set up, the node sets up BAP entities respectively for the mobile termination (IAB-MT) and first distributed unit (IAB-DU) of the node.
14. The method according to supplement 1, wherein,
   the node respectively saves BAP configuration for the first IAB-DU and BAP configuration for the second IAB-DU of F1AP.
15. The method according to supplement 14, wherein,
   the BAP configuration includes uplink traffic to routing ID mapping configuration and/or uplink traffic to BH RLC channel mapping configuration.
16. The method according to supplement 14, wherein,
   the BAP layer maintains variables for the second IAB-DU.
17. The method according to supplement 16, wherein,
   the variables include:
   a second uplink traffic to routing ID mapping configuration and/or a second uplink traffic to BH RLC channel mapping configuration.
18. The method according to supplement 17, wherein,
   the second uplink traffic to routing ID mapping configuration includes a traffic type specifier and a BAP routing identity; or
   the second uplink traffic to BH RLC channel mapping configuration includes a traffic type specifier, an egress link identity and an egress BH RLC channel identity.
19. The method according to supplement 14, wherein,
   at the node, for a backhaul adaptation protocol service data unit (BAP SDU) received from the upper layer and to be transmitted in an upstream direction, the BAP entity performs mapping to a BAP address and a BAP path identity based on the following configuration variables:
   a first uplink traffic to routing ID mapping configuration, the configuration being derived from F1AP signaling on the node, the F1AP signaling including no signaling on the second IAB-DU; and
   a second uplink traffic to routing ID mapping configuration, the configuration being derived from F1AP signaling on the second IAB-DU.
20. The method according to supplement 19, wherein,
   at the node, for the BAP SDU received from the upper layer and to be transmitted in an upstream direction, the BAP entity further performs the following operation:
   for a BAP SDU encapsulating an F1-U packet, if the BAP SDU is from the second IAB-DU, selecting a corresponding entry in the second uplink traffic to routing ID mapping configuration based on a traffic type specifier to which a destination IP address and a tunnel endpoint identifier (TEID) correspond.
21. The method according to supplement 14, wherein,
   at the node, for a BAP SDU received from the upper layer and to be transmitted to an upstream direction, the BAP entity performs mapping to an egress BH RLC channel identity based on the following configuration variables:
   a first uplink traffic to BH RLC channel mapping configuration, the configuration being derived from F1AP signaling on the node, the F1AP signaling including no signaling on the second IAB-DU; and
   a second uplink traffic to BH RLC channel mapping configuration, the configuration being derived from F1AP signaling on the second IAB-DU.
22. The method according to supplement 21, wherein,
   at the node, for the BAP SDU received from the upper layer and to be transmitted in an upstream direction, after an egress link is selected, the BAP entity further performs the following operations:
   for a BAP SDU encapsulating an F1-U packet, if the BAP SDU is from the second IAB-DU, selecting a corresponding entry in the second uplink traffic to routing ID mapping configuration based on a traffic type specifier to which a destination IP address and a TEID correspond and a link identity to which the selected egress link corresponds,
   if an entry exists, selecting an egress BH RLC channel to which an egress BH RLC channel identity in the entry corresponds,
   and if no corresponding entry is found, selecting any egress BH RLC channel on the egress link.
23. The method according to supplement 1, wherein,
   the first distributed unit is controlled by the first donor central unit,
   and the second distributed unit is controlled by the second donor central unit.
24. The method according to supplement 23, wherein,
   the first donor central unit is an F1 terminating donor central unit of the node in a case where migration of a distributed unit is not performed, or a source donor central unit during a process of migration of a distributed unit,
   and the second donor central unit is a target donor central unit of the node during the process of migration of a distributed unit.

### Method in the embodiments of the second aspect

1. A method for transmitting and receiving a signal, applicable to an integrated access and backhaul (IAB) node, the method including:
   using general default BAP configuration or respectively using respective default BAP configuration by a mobile termination (MT) in the node for a first distributed unit (IAB-DU) and a second distributed unit (IAB-DU) in the node; and
   transmitting a signal by the mobile termination MT in the node based on the default BAP configuration.
2. The method according to supplement 1, wherein,
   in a case where the general default BAP configuration is used for the first distributed unit (IAB-DU) and the second distributed unit (IAB-DU) in the node,
   at the node, for a BAP SDU received from an upper layer and to be transmitted in an upstream direction, a BAP entity performs the following operation:
      if F1AP does not perform first uplink traffic to routing ID mapping configuration or reconfiguration on the IAB-DU from which the BAP SDU comes after the RRC layer configures a first default uplink BAP routing identity, selecting a BAP address and a BAP path identity configured in the first default uplink BAP routing identity for a non-F1-U packet.
3. The method according to supplement 1, wherein,
   in a case where the general default BAP configuration is used for the first distributed unit (IAB-DU) and the second distributed unit (IAB-DU) in the node,
   at the node, for a BAP SDU received from an upper layer and to be transmitted in an upstream direction, after an egress link is selected, the BAP entity further performs the following operation:
      if F1AP does not perform first uplink traffic to BH RLC channel mapping configuration or reconfiguration on the IAB-DU from which the BAP SDU comes after the RRC layer configures a first default uplink BH RLC channel identity, selecting an egress BH RLC channel to which a first default uplink BH RLC channel identity corresponds for a non-F1-U packet.
4. The method according to supplement 1, wherein,
   in a case where the respective default BAP configuration is respectively used for the first distributed unit (IAB-DU) and the second distributed unit (IAB-DU) in the node,
   a second default BAP configuration is defined for the second IAB-DU,
   non-F1-U data to which the first IAB-DU corresponds use the first default BAP configuration,
   and non-F1-U data to which the second IAB-DU corresponds use the second default BAP configuration.
5. The method according to supplement 4, wherein,
   the second BAP default configuration is set in an RRC message,
   and the second BAP default configuration includes a second default uplink BAP routing identity and a second default uplink BH RLC channel.
6. The method according to supplement 4, wherein,
   at the node, for the BAP SDU received from the upper layer and to be transmitted to an upstream direction, the BAP entity performs the following operation:
   if a traffic is related to the second IAB-DU, the second default uplink BAP routing identity is configured and F1AP does not perform uplink traffic to routing ID mapping configuration or reconfiguration for the second IAB-DU after the last configuration or reconfiguration of the second default uplink BAP routing identity by RRC, selecting a BAP address and a BAP path identity configured in the second default uplink BAP routing identity for a non-F1-U packet.
7. The method according to supplement 4, wherein,
   at the node, for a BAP SDU received from an upper layer and to be transmitted in an upstream direction, after an egress link is selected, the BAP entity further performs the following operation:
   if a traffic is related to the second IAB-DU, the second default uplink BH RLC channel is configured and F1AP does not perform first uplink traffic to BH RLC channel mapping configuration or reconfiguration for the second IAB-DU after configuration of a second default uplink BH RLC channel by RRC, selecting an egress BH RLC channel to which a second default uplink BH RLC channel identity corresponds for a non-F1-U packet.
8. The method according to supplement 1, wherein,
   the first distributed unit is controlled by the first donor central unit,
   and the second distributed unit is controlled by the second donor central unit.
9. The method according to supplement 8, wherein,
   the first donor central unit is an F1 terminating donor central unit of the node in a case where migration of a distributed unit is not performed, or a source donor central unit during a process of migration of a distributed unit,
   and the second donor central unit is a target donor central unit of the node during the process of migration of a distributed unit.

### Method in the embodiments of the third aspect

1. A method for transmitting and receiving a signal, applicable to an integrated access and backhaul (IAB) node, the method including:
   for data in a downstream direction arriving at the node, determining by the node based on an IP address that the data in the downstream direction are transferred to a first distributed unit (IAB-DU) or second distributed unit (IAB-DU) of the node.
2. The method according to supplement 1, wherein,
   the node determines based on a target IP address that the data in the downstream direction are transferred to the first distributed unit (IAB-DU) or second distributed unit (IAB-DU) of the node.
3. The method according to supplement 2, wherein the method further includes:
   when the node requests an IP address from a donor central unit (donor CU) via RRC, a purpose of usage of the IP address is included, the purpose of usage being used to indicate that the IP address is used by the second distributed unit (IAB-DU).
4. The method according to supplement 3, wherein,
   if an RRC message received by the node contains an assigned IP address and a corresponding purpose of usage is indicated as being used by the second distributed unit (IAB-DU), the node saves the IP address as an IP address of the second IAB-DU.
5. The method according to supplement 2, wherein,
   when a BAP data protocol data unit (PDU) is received from a lower layer, a reception portion of a BAP entity performs the following operations:
   if a destination field of the BAP data PDU matches with a BAP address configured by an IAB-donor providing an ingress BH RLC channel, removing a BAP header of the BAP data PDU and submitting the BAP SDU to an upper layer; and
   deciding by the upper layer based on the target IP address of the BAP SDU to transfer the BAP SDU to the first distributed unit (IAB-DU) or the second distributed unit (IAB-DU).
6. The method according to supplement 1, wherein,
   the node determines based on a source IP address to transfer the data in the downstream direction to the first distributed unit (IAB-DU) or second distributed unit (IAB-DU) of the node.
7. The method according to supplement 6, wherein,
   when a BAP data PDU (protocol data unit) is received from a lower layer, the reception portion of the BAP entity performs the following operations:
   if the destination field of the BAP data PDU matches with the BAP address configured by the IAB-donor providing an ingress BH RLC channel, removing the BAP header of the BAP data PDU and submitting the BAP SDU to the upper layer; and
   deciding by the upper layer based on the source IP address of the BAP SDU to transfer the BAP SDU to the first distributed unit (IAB-DU) or second distributed unit (IAB-DU).
8. The method according to supplement 1, wherein,
   the first distributed unit is controlled by the first donor central unit,
   and the second distributed unit is controlled by the second donor central unit.
9. The method according to supplement 8, wherein,
   the first donor central unit is an F1 terminating donor central unit of the node in a case where migration of a distributed unit is not performed, or a source donor central unit during a process of migration of a distributed unit,
   and the second donor central unit is a target donor central unit of the node during the process of migration of a distributed unit.

### Method in the embodiments of the fourth aspect

1. A method for transmitting and receiving a signal, applicable to an integrated access and backhaul (IAB) node, the method including:
   before migration of a DU is performed, performing configuration of dual active protocol stack (DAPS) of a radio bearer on a terminal equipment served by the node.
2. The method according to supplement 1, wherein,
   radio bearers of all terminal equipment served by the node are configured as DAPS bearers.

## Claims

1. An apparatus for transmitting and receiving signals, applicable to an integrated access and backhaul (IAB) node, the apparatus comprising a first processing unit, the first processing unit controlling the node so that the node executes the following operations:
configuring a first distributed unit (IAB-DU) and a second distributed unit (IAB-DU) in the node respectively with uplink backhaul mapping information by different donor central units; and
transmitting signals by a mobile termination of the node according to the uplink backhaul mapping information.

2. The apparatus according to claim 1, wherein the first processing unit controls the node to execute the following operation:
setting up a second backhaul adaptation protocol (BAP) entity different from a first BAP entity in the node,
wherein,
the first BAP entity maintains variables, configured by a first donor central unit (donor CU), of a BAP layer of the node,
and the second BAP entity maintains variables, configured by a second donor central unit, of the BAP layer of the node.

3. The apparatus according to claim 2, wherein the first processing unit controls the node to execute the following operation:
for data transmission in an upstream direction, selecting a corresponding first BAP entity or second BAP entity by the node according to a DU to which traffics of the data transmission belong.

4. The apparatus according to claim 2, wherein the first processing unit controls the node to execute the following operation:
receiving second configuration information by a radio resource control (RRC) layer of the node, the second configuration information being used to configure the second BAP entity.

5. The apparatus according to claim 4, wherein,
the second configuration information is a newly added information element (IE) in an RRC reconfiguration message,
and the second configuration information comprises at least one piece of the following information for a DU to which the second BAP entity corresponds: a BAP address, a default uplink BAP routing identity, or an uplink default backhaul radio link control (BH RLC) channel.

6. The apparatus according to claim 5, wherein,
when an RRC message received by the node comprises the second BAP configuration information and the second BAP configuration information is set to be a first value, if the second BAP entity of the node is not set up, the node sets up the second BAP entity corresponding to the second BAP configuration information at a mobile termination (IAB-MT) side.

7. The apparatus according to claim 1, wherein the first processing unit controls the node to execute the following operation:
respectively saving BAP configuration for the first IAB-DU and BAP configuration for the second IAB-DU of F 1AP by the node.

8. The apparatus according to claim 7, wherein,
the BAP layer maintains variables for the second IAB-DU,
the variables comprising:
a second uplink traffic to routing ID mapping configuration and/or a second uplink traffic to BH RLC channel mapping configuration.

9. The apparatus according to claim 7, wherein,
at the node, for a backhaul adaptation protocol service data unit (BAP SDU) needing to be transmitted in an upstream direction received from an upper layer, the BAP entity performs mapping to a BAP address and a BAP path identity based on the following configuration variables:
a first uplink traffic to routing ID mapping configuration, the configuration being obtained from F1AP signaling to the node, the F1AP signaling comprising no signaling to the second IAB-DU; and
a second uplink traffic to routing ID mapping configuration, the configuration being obtained from F1AP signaling to the second IAB-DU.

10. The apparatus according to claim 9, wherein,
at the node, for the BAP SDU needing to be transmitted in an upstream direction received from the upper layer, the BAP entity further performs the following operation:
for a BAP SDU encapsulating an F1-U packet, if the BAP SDU is from the second IAB-DU, selecting a corresponding entry in the second uplink traffic to routing ID mapping configuration based on a traffic type specifier to which a destination IP address and a tunnel endpoint identifier (TEID) correspond.

11. An apparatus for transmitting and receiving a signal, applicable to an integrated access and backhaul (IAB) node, the apparatus comprising a second processing unit, the second processing unit controlling the node to execute the following operations:
using general default BAP configuration or respectively using respective default BAP configuration by a mobile termination (MT) in the node for a first distributed unit (IAB-DU) and a second distributed unit (IAB-DU) in the node; and
transmitting signals by the mobile termination MT in the node based on the default BAP configuration.

12. The apparatus according to claim 11, wherein,
in a case where the respective default BAP configuration is respectively used for the first distributed unit (IAB-DU) and the second distributed unit (IAB-DU) in the node,
a second default BAP configuration is defined for the second IAB-DU,
non-F1-U data to which the first IAB-DU corresponds use the first default BAP configuration,
and non-F1-U data to which the second IAB-DU corresponds use the second default BAP configuration.

13. The apparatus according to claim 12, wherein,
at the node, for the BAP SDU needing to be transmitted to an upstream direction received from the higher layer, the BAP entity performs the following operation:
if a traffic is related to the second IAB-DU, the second default uplink BAP routing identity is configured and F1AP does not perform uplink traffic to routing ID mapping configuration or reconfiguration for the second IAB-DU after the second default uplink BAP routing identity is configured or reconfigured at last time of RRC, selecting a BAP address and a BAP path identity configured in the second default uplink BAP routing identity for a non-F1-U packet.

14. The apparatus according to claim 12, wherein,
at the node, for a BAP SDU needing to be transmitted to an upstream direction received from a higher layer, after an egress link has been selected, the BAP entity further performs the following operation:
if a traffic is related to the second IAB-DU, the second default uplink BH RLC channel is configured and F1AP does not perform first uplink traffic to BH RLC channel mapping configuration or reconfiguration for the second IAB-DU after RRC configures a second default uplink BH RLC channel, selecting an egress BH RLC channel to which a second default uplink BH RLC channel identity corresponds for a non-F1-U packet.

15. An apparatus for transmitting and receiving signals, applicable to an integrated access and backhaul (IAB) node, the apparatus comprising a third processing unit, the third processing unit controlling the node to execute the following operation:
for data in a downstream direction arriving at the node, determining by the node based on an IP address that the data in the downstream direction are transferred to a first distributed unit (IAB-DU) or a second distributed unit (IAB-DU) of the node.

16. The apparatus according to claim 15, wherein,
the node determines based on a target IP address that the data in the downstream direction are transferred to the first distributed unit (IAB-DU) or the second distributed unit (IAB-DU) of the node.

17. The apparatus according to claim 16, wherein the third processing unit controls the node to execute the following operation:
when the node requests an IP address from a donor central unit (donor-CU) via RRC, a purpose of usage of the IP address is included, the purpose of usage being used to indicate that the IP address is used by the second distributed unit (IAB-DU).

18. The apparatus according to claim 17, wherein,
if an RRC message received by the node contains an assigned IP address and a corresponding purpose of usage is indicated as being used by the second distributed unit (IAB-DU), the node saves the IP address as an IP address of the second IAB-DU.

19. The apparatus according to claim 16, wherein,
when a BAP data protocol data unit (PDU) is received from a lower layer, a reception portion of a BAP entity performs the following operations:
if a destination field of the BAP data PDU matches with a BAP address configured by an IAB-donor providing an ingress BH RLC channel, removing a BAP header of the BAP data PDU and submitting the BAP SDU to an upper layer; and
deciding by the upper layer based on the target IP address of the BAP SDU to transfer the BAP SDU to the first distributed unit (IAB-DU) or the second distributed unit (IAB-DU).

20. The apparatus according to claim 15, wherein,
the node determines based on a source IP address to transfer the data in the downstream direction to the first distributed unit (IAB-DU) or the second distributed unit (IAB-DU) of the node.
